Europäisches Patentamt

European Patent Office

Office européen des brevets

(11) Publication number: **0 164 137**
**B1**

(12) **EUROPEAN PATENT SPECIFICATION**

(45) Date of publication of patent specification: 27.06.90

(21) Application number: **85108446.7**

(22) Date of filing: **07.05.81**

(60) Publication number of the earlier application in accordance with Art. 76 EPC: **0 039 910**

(51) Int. Cl.⁵: **B 29 B 15/02, C 08 C 4/00**

(54) **Process for extracting rubber and by-products from guayule and guayule-like shrubs.**

(30) Priority: **14.05.80 US 149862**

(43) Date of publication of application:
**11.12.85 Bulletin 85/50**

(45) Publication of the grant of the patent:
**27.06.90 Bulletin 90/26**

(84) Designated Contracting States:
**AT BE DE FR GB IT LU SE**

(56) References cited:
**US-A-1 753 185**
**US-A-2 390 860**
**US-A-2 459 369**
**US-A-4 136 131**

(73) Proprietor: **THE FIRESTONE TIRE & RUBBER COMPANY**
**1200 Firestone Parkway**
**Akron, Ohio 44317 (US)**

(72) Inventor: **Kay, Edward L., Dr.**
**79 S. Tamarack Road**
**Akron Ohio 44319 (US)**
Inventor: **Gutierrez, Richard**
**13859 Bluffton, N.W.**
**Canal Fulton Ohio 44614 (US)**

(74) Representative: **Kraus, Walter, Dr. et al**
**Patentanwälte Kraus, Weisert & Partner**
**Thomas-Wimmer-Ring 15**
**D-8000 München 22 (DE)**

EP 0 164 137 B1

Courier Press, Leamington Spa, England.

# EP 0 164 137 B1

**Description**

This invention relates to a process for recovering usable products from guayule and guayule-like fibrous shrubs comprising the steps of (a) grinding the guayule shrub, (b) simultaneously extracting from the ground shrub the resin and rubber with an hydrocarbon solvent, and (C) recovering resin and rubber. A process of this kind is known from US—A—4 136 131.

The usual natural rubber of commerce is obtained by tapping the Hevea rubber tree (Hevea brasiliensis), collecting its latex, and coagulating the latex to obtain rubber. Neither Hevea nor any other rubber producing tree can be practically grown in the United States. Future green plant production of rubber and hydrocarbons in the United States will involve extraction processes more like those applicable to guayule (Parthenium argentatum) than those applicable to Hevea.

Guayule is one of many rubber producing plants. It has served as an important source of rubber in the past and interest in it has recently revived. The prehistoric native process for extracting rubber from guayule was to chew pieces of shrub, expectorate fibrous matter and retain gummy matter until a mass of resinous rubber accumulated in the mouth. Consolidation of many chewing-gum sized pieces provided enough material for rubber balls and other articles.

It is significant that the most modern process for extracting rubber from guayule is that, for example, practiced in a pilot plant at Saltillo, Coahaila, Mexico, and described in detail by the National Academy of Sciences 1977 booklet "Guayule: An Alternative Source of Natural Rubber."

Mastication of ground guayule shrub is effected by wet-milling with a rotating disc (pulping) mill to recover the resinous rubber in the form of "worms" which are separated from fibrous matter by flotation in water. Antecedent to wet-milling, lush guayule shrub is parboiled to coagulate the rubber latex and aid in removing leaves, then hammermilled to a size suitable for wet grinding in the pulping mill. Subsequent to the wet-milling and separation of bark and wood, the rubber is deresinated by acetone extraction and purified by dissolving in cyclohexane and filtering or centrifuging. These main processing steps and several auxiliary operations make up the current complicated separation process for winning rubber from guayule shrub. For the sake of clarity in presenting data, the preceding described process will be referred to as the "Saltillo" process.

The Saltillo process is essentially the same as that described in US—A—2 434 412. It is also similar to the process taught in US—A—2 459 369 except that deresination of the rubber results in a lower recovery of resin than in the patented process of deresinating the whole plant material; this patent does, however, indicate that it would be optional to process defoliated shrub. This statement should be considered in the light of the statement in US—A—4 159 903 (col. 43, lines 25—27) that the entire plant, except the leaves, must be processed to extract the rubber.

Processing of whole guayule shrub has definite economic and energy-conservation benefits. The processing costs and energy requirements for parboiling and defoliating of guayule shrub are eliminated.

Additional benefits of applicants' invention will be more apparent if one realizes that guayule shrub contains not only a valuable rubber component but also a resin fraction generally described as sugars and polysacchrides as well as a terpene and glyceride-ester fraction. Again, for the sake of clarity, the sugars and polysacchride fraction will be referred to as the water-soluble fraction to distinguish from the resin fraction which will be defined based on solubility characteristics; that is, the resin fraction will be defined as that portion of guayule shrub which is soluble in a deresinating solvent such as acetone or other solvents herein disclosed as being equivalent to acetone.

A really efficient guayule processing procedure should recover all of the inherently valuable components of guayule shrub. Applicants will endeavor to specifically disclose the advantages of their invention over the prior art relative to recovery of all of the valuable components of guayule shrub in an economically and energy-efficient manner.

In general, we will refer to the Saltillo process as being the most technologically advanced process of the prior art. We will refer to the procedure of recovering guayule rubber by dispersing ground guayule shrub in water and allowing the rubber to float to the surface for subsequent recovery as the water-flotation procedure.

We will broadly refer to the process of extracting rubber directly from the guayule shrub with a hydrocarbon as solvent extraction. The solvent extraction of rubber can be effected by either percolation or total immersion. By "percolation" we mean that solvent is passed through a fixed bed of shrub to effect extraction. By "immersion" we mean that the shrub is immersed in solvent contained in a suitable vessel and the shrub/solvent mixture can be agitated to effect extraction.

By "whole" guayule shrub we mean the complete shrub including the roots, base, stem, branches and leaves. Our intent is to also include "pollarded" guayule shrub in the above definition of "whole" guayule shrub.

"Pollarded" guayule shrub is defined as shrub which is harvested by cutting the shrub a few cm above ground level and harvesting the greater portion of the base, branches, stems and leaves. The root system is left in the soil to generate another "shrub". By defoliated guayule shrub applicants mean the whole guayule shrub (including pollarded shrub) which has been treated to remove essentially all of the leaves.

All other abbreviations used in this specification refer to scientifically accepted notations.

Of necessity, we have had to demonstrate our processes using wild guayule shrub native to Texas. We

2

believe that our disclosed processes would give essentially the same results with cultivated guayule shrubs of all varieties and of generally higher rubber content.

Those skilled in the art have long recognized that direct solvent extraction of rubber from guayule shrub seems to offer many advantages over water flotation. The primary advantage would be elimination of many processing steps including parboiling and/or pressure cooking; wet-milling; addition of acid, alkali, surfactants, etc.; flotation; water washing; and several drying and purification steps. Subsidiary advantages to be expected from solvent extraction in comparison to water flotation are large savings in process water (guayule grows and is processed in arid regions), possible improved resin yields and lower heavy-metal contamination of the rubber and the provisions for solution-phase purification as an integral component of the operation. However, solvent extraction of rubber from guayule, though often studied, has been found completely impractical on a scale, heretofore. In fact, the earliest industrial processes for guayule were based on solvent extraction but were found impractically difficult and expensive and were replaced by wet-milling techniques, see US—A—0 982 373. A solvent extraction is contemplated in US—A—1 695 676 wherein the cell walls of the guayule shrub are first broken down by penetrating the plant material with high pressure gas and suddenly releasing it to effect an instantaneous expansion. The advantages of this process are diminished by the expense of the requisite high pressure equipment and the inherent inefficiency of a batch-type procedure.

As is well known, the fundamental problem in solvent extraction of rubber from plant materials is that rubber is a high molecular weight polymer which is difficult to pass through cell walls and membranous tissue even when in solution. Thus, in order to accomplish solvent extraction of rubber, the plant structure has to be very thoroughly disrupted.

The above mentioned US—A—4 136 131 is directed to the extraction of rubber or rubber-like materials from fibrous plants such as guayule, wherein said plants are subjected to simultaneous compression and high shear forces under nonaqueous conditions to result in (1) comminuted fibrous matter and (2) rubber-like substances which cohere into a plastic mass; this mass is shaped into particles; said rubber-like substances are then solvent extracted followed by recovering same from said solvent.

The object of this invention is to obtain significant process improvements for achieving high yields of acceptable rubber and by-products such as the water-soluble and resin fractions and bagasse from guayule shrubs. Processing costs and energy requirements should be significantly reduced and the rubber recovered should be in commercially acceptable form.

According to the present invention, this object is achieved by a process of recovering usable products from guayule and guayule-like fibrous shrubs comprising the steps of (a) grinding the guayule shrub; (b) simultaneously extracting from the ground shrub the resin and rubber with a hydrocarbon solvent; (c) recovering resin and rubber; which is characterized in that the extracting step (b) comprises recycling the solution of rubber/resin in the hydrocarbon solvent, i.e. the miscella, several times through the ground shrub, the recovering step (c) comprises coagulating the rubber in a solvent for the resin, said solvent being a non-solvent for the rubber.

In the extracting step (b) either percolation or immersion can be used and countergravity percolation is generally effective, particularly through ground whole shrub. The rubber is precipitated with a non-solvent for rubber, such as a ketone, for example, acetone. Resin-free rubber is then recovered in relatively pure form by known techniques, such as washing, reprecipitation followed by filtering and/or centrifugation. The rubber can be recovered by the water-flotation process or by solvent extraction. The bagasse can be recovered saturated with water from the water-flotation procedure, a physical state which will facilitate partial hydrolysis of the bagasse to give a product suitable for feeding animals. Alternatively, essentially complete hydrolysis of the bagasse can be effected to fermentable sugars which could be used as such or fermented to prepare ethanol.

The bagasse recovered from the solvent extraction process would be relatively free of water and could be used to advantage as a fuel to supply the power requirements of our process. One practical result of processing the whole shrub is that if a solvent-percolation-bed is used, the bed is diluted with leaves and the process is more efficient in that the rubber/shrub ratio is lowered which tends to increase percolation of rubber miscella through the bed.

Our preferred solvent-extraction procedure for recovering rubber from Guayule shrub is one involving our counter-gravity extraction step.

Solvent extraction of rubber from guayule shrub by known methods of extraction has been found to be difficult. Extraction of the rubber can be done by percolation and total immersion. In percolation the viscosity of the rubber cement causes a slow percolation rate and extracting with a concentrated miscella becomes almost impossible. Lowering of the L/D (length/diameter) ratio of the column will aid percolation. In immersion, the rubber is extracted easily but filtering becomes a problem.

By employing our counter gravity method of extraction one can modify commercially available extraction equipment to extract the rubber.

A practical embodiment that can be implemented in our general procedure is to reduce dirt contamination in guayule rubber obtained by solvent-extraction via percolation by recycling to the column until the desired low levels of dirt are attained. The bed functions as an efficient filter.

In our extraction process for guayule shrub, several valuable by-products are recoverable. The bagasse, which is approximately 50% of the shrub, can be recovered and can be used as fuel to supply

3

power for our process.

The resins which are extracted from the shrub are also recoverable and are a mixture of terpenes, terpenoids, parthenoids and glycerides of fatty acids. The resin component also contains a valuable hard wax similar to carnuba wax. The resin can be considered for use as an adhesive in plywood and as a component in varnishes; said resin can also be used as a tackifying resin in the manufacture of reinforced composite rubber articles such as tires and car radiator hose.

The term "rubber" is defined herein in its normal sense as the elastic naturally occurring hydrocarbon polymer of isoprene having predominantly a cis-1,4 structure, such as that obtained from Hevea brasiliensis. "Rubber-like polymeric hydrocarbons" is used herein to refer to naturally occurring nonrubber hydrocarbon polymers such as gutta-percha and balata. These are also polymers of isoprene. "Polymeric hydrocarbon substances" is used herein generically to refer to both rubber- and rubber-like polymeric hydrocarbons.

Our invention can be practiced with a large number of plant species bearing rubber and rubber-like hydrdocarbons including particularly guayule (Parthenium argentatum), Rabbit-Brush (Crysothamnus nauseousus), Rubbervine (Cryptostegia grandiflora), Milkweeds (Asclepias incarnata, sublata, syriaca, et al), Goldenrods (Solidago altissima, graminifolia, lavenworthii, rigida, et al), Sow thistles (Sonchus arvensis oleraceous, et al), Rosin Weeds (Silphium species), Mountain Mints (Pycnanthemum species), and Cacalia atriplicifolia. Many other plants which produce rubber and rubber-like hydrocarbons are known, particularly among the compositae, Euphorbiaceae, Labiatae, and Moraceae and it is possible that the invention will be found applicable to most of these species also; particularly if plant breeders succeed in current efforts to develop for some of these species new varieties high in hydrocarbon and rubber contents.

Grinding of guayule shrub can be achieved with anyone of the known mill units; these include hammer mills, roll mills, stone mills, ball mills and pulp mills. We prefer a hammer mill with an air conveyor system.

In the process of the present invention the resins and the rubber are recovered in commercially acceptable high yields with solvent extraction. More bagasse is also recovered when processing the whole shrub and achieve a reduction in processing eneregy requirements. It is preferred to process guayule shrub shortly after harvest.

It is understood that about 2% to 15% by weight of the leaves of guayule shrub represents a recoverable resin fraction depending on moisture content and season of harvest. We have found that it is more efficient to deresinate with concentrated resin miscella as herein exemplified.

## Examples

The following example 1 is representative for the present invention. All parts are by weight unless otherwise specified. Example 2 is a flow sheet of the known Saltillo process.

## Example 1

In this example, whole guayule shrub is extracted with a solvent for both resin and rubber; the rubber is then coagulated in a solvent for the resin, said solvent being a non-solvent for the rubber. We have discovered that it is possible to extract both guayule resin and rubber simultaneously with a hydrocarbon solvent such as hexane. We have indicated that conventional percolation via gravity of hexane through ground guayule shrub is slow unless the length/diameter ratio of the percolating column is lower than about five. Above a five length/diameter ratio column, percolation rate of the extracting solvent is considered uneconomically slow. As will be disclosed in subsequent examples, the percolation rate of a solvent for both guayule resin and rubber can be enhanced if the percolating bed is diluted with an inert material such as bagasse generated in the process or if the bed is presaturated with a nonsolvent for rubber such as acetone or water. Excellent extraction rates can be achieved if the percolation is conducted counter to gravity so that the actual flow of extracting solvent tends to prevent the bed from compacting and the force of gravity tends to retain the relatively dense shrub in the percolating column.

Extraction of both guayule resin and rubber simultaneously can advantageously be conducted by the procedure termed total immersion. The total immersion procedure consists of charging ground guayule shrub to an appropriate vessel containing a hydrocarbon solvent such as hexane. The resulting slurry can be agitated to effect a rapid dissolution of the resin and rubber. The miscella can then be drained and total recovery of resin and rubber ensured via washing the drained-shrub with additional hexane. The combined extracts can then be filtered to remove insoluble material and then added to a solvent such as acetone which is a good solvent for guayule resin but essentially a nonsolvent for guayule rubber to precipitate the contained rubber.

We charged a glass column 5 cm in diameter to a height of 25 cm with guayule shrub ground to a nominal 3 mm size. Approximately 3 liters of hexane were charged to the top of the column and allowed to percolate via gravity through the bed. The effluent was a relatively dark greenish-gray liquid which was recycled three times to effect additional extraction of resin and rubber. By recycling the miscella, fines from the bottom of the bed were effectively removed from the miscella via the filtering action of the bed. The bed was drained and then flushed with fresh hexane to recover occluded miscella.

The miscella and hexane flush were combined and filtered. At this point the hexane solution of guayule resin and rubber was diluted with acetone under conditions of good agitation. As would be obvious to those skilled in the art, the hexane/resin/rubber solution could have been concentrated by stripping hexane

4

so that the amount of acetone required to completely coagulate the rubber would be minimal.

The coagulated rubber was easily freed of the acetone solution of resin by passing the slurry over a screen to retain the rubber. The rubber was relatively easily dried by removal of the volatile acetone. The rubber thus obtained was a light grayish green color and of good quality.

We conducted another experiment in which the ground shrub was first percolated with hot water (about 50°C) to remove a portion of the water-soluble fraction and to saturate the shrub with water. Upon charging of hexane to the water-saturated bed, the percolation rate of hexane was significantly higher than observed with an essentially dry percolation bed. The extract consisting of a hexane solution of guayule resin and rubber was diluted with acetone to coagulate the rubber. The guayule rubber recovered was of a lighter color, almost a light tan color in contrast to the grayish-green of the preceding example and dark gray characteristic of rubber prepared via the Saltillo process.

It should be noted that a significant advantage of our process is that handling of the rather large amount of guayule shrub is minimized and that the four valuable components of guayule, namely, water-solubles, resin, rubber and bagasse are recovered in good yields.

We have demonstrated the technical feasibility of using our process in a total immersion process using both dry shrub as well as water-saturated shrub.

## EXAMPLE 2

### Schematic Diagram of Saltillo Process

```
                      Fresh Shrub
                           |
                     +-----------+
                     | Parboiler |----------> Leaves
                     +-----------+
                           |
                    +------------+
                    | Hammermill |
                    +------------+
                           |
  Aqueous  )                |
  Caustic  }--------------->|
  Soda     )                |
                     +-----------+
                     | Bauer Mill |
                     +-----------+
                           |
                   +---------------+
                   | Flotation Vat |----+
                   +---------------+    |----> Wood, Pulp
                   +---------------+    |       and Cork
                   | Flotation Vat |----+
                   +---------------+
                           |
                      +--------+
                      | Washer |
                      +--------+
                           |
  Surfactant------------>  |
                           |
  Acetone <============    |
           ===========> +-------------+        (Resins
                        | Deresinator |------->{
                        +-------------+        (Cork and Debris
                               |
  Antioxidant)          +------------------+       +-------+
  Hexane     }--------->| Solution Phase   |------>| Dryer |
             )          | Purification     |       +-------+
                        +------------------+           |
                                                     Rubber
```

The Saltillo process for recovering rubber from guayule shrub, as heretofore described, is one wherein the entire shrub is initially parboiled to remove leaves. In our process, the entire shrub can be processed and we make use of the leaves to, for example, recover a greater quantity of bagasse and resin an aid percolation by diluting the ground shrub bed in the solvent extraction processes. The rubber recovered according to our Example 1 procedure is improved as it is lighter in color than that recovered by the well known Saltillo process.

# EP 0 164 137 B1

**Claim**

A process of recovering usable products from guayule and guayule-like fibrous shrubs comprising the steps of:

(a) grinding the guayule shrub;

(b) simultaneously extracting from the ground shrub the resin and rubber with an hydrocarbon solvent;

(c) recovering resin and rubber;

characterized in that the extracting step (b) comprises recycling the solution of rubber/resin in the hydrocarbon solvent, i.e. the miscella, several times through the ground shrub, the recovering step (c) comprises coagulating the rubber in a solvent for the resin, said solvent being a non-solvent for the rubber.

**Patentanspruch**

Verfahren zur Gewinnung von verwendbaren Produkten aus Guayule- und guayuleartigen faserförmigen Sträuchern, umfassend die Stufen

(a) Vermahlen des Guayule-Strauchs;

(b) gleichzeitiges Extrahieren des Harzes und von Kautschuk aus dem gemahlenen Strauch mit einem Kohlenwasserstoff-Lösungsmittel;

(c) Gewinnung des Harzes und des Kautschuks, dadurch gekennzeichnet, daß die Extraktionsstufe (b) die Zurückführung der Lösung von Kautschuk/Harz in das Kohlenwasserstoff-Lösungsmittel, d.h. das Miscella, mehrere Male durch den gemahlenen Strauch umfaßt, daß die Gewinnungsstufe (c) die Koagulierung des Kautschuks in einem Lösungsmittel für das Harz umfaßt und daß das genannte Lösungsmittel ein Nicht-Lösungsmittel für den Kautschuk ist.

**Revendication**

Procédé de séparation de produits utilisables à partir du guayule et d'arbustes fibreux analogues au guayule, comprenant les étapes consistant:

(a) à broyer le guayule;

(b) à extraire simultanément de l'arbuste broyé la résine et le caoutchouc avec un solvant hydrocarboné;

(c) à séparer la résine et le caoutchouc;

caractérisé en ce que l'étape d'extraction (b) consiste à recycler la solution de caoutchouc/résine dans le solvant hydrocarboné, c'est-à-dire les micelles, à plusieurs reprises à travers le broyat d'arbuste, l'étape de séparation (c) consiste à coaguler le caoutchouc dans un solvant de la résine, ce solvant étant un non-solvant pour le caoutchouc.